# EUROPÄISCHE PATENTSCHRIFT

(11) **EP 1 649 327 B1**
(45) Veröffentlichungstag und Bekanntmachung des Hinweises auf die Patenterteilung: **17.12.2008**
(21) Anmeldenummer: 04741256.4
(22) Anmeldetag: 23.07.2004
(51) Int. Cl.: G05B 9/03

(54) **VORRICHTUNG ZUR BESTIMMUNG UND/ODER ÜBERWACHUNG EINER PROZESSGRÖSSE**
DEVICE FOR DETERMINING AND/OR MONITORING A PROCESS VARIABLE
DISPOSITIF POUR DETERMINER ET/OU SURVEILLER UNE GRANDEUR DE PROCESSUS

(30) Priorität: 25.07.2003 US 489941 P
(43) Veröffentlichungstag der Anmeldung: 26.04.2006
(73) Patentinhaber: ENDRESS + HAUSER GMBH + CO., 79689 Maulburg (DE)
(72) Erfinder: MÜLLER, Alexander, 79689 Maulburg (DE); MÜLLER, Roland, 79585 Steinen (DE); PROBST, Stefan, 79576 Weil am Rhein (DE)
(74) Vertreter: Andres, Angelika Maria
(86) Internationale Anmeldenummer: PCT/EP2004/008303
(87) Internationale Veröffentlichungsnummer: WO 2005/013017

(56) Entgegenhaltungen:
- EP-A- 1 043 640
- EP-A- 1 102 378
- DE-C- 4 439 879
- US-A- 6 037 857

## Beschreibung

Die Erfindung bezieht sich auf eine Vorrichtung und ein Verfahren zur Bestimmung und/oder Überwachung einer physikalischen oder chemischen Prozessgröße.

Zur Bestimmung einer physikalischen Meßgröße werden die unterschied-lichsten Typen von Sensoren eingesetzt, denen zum Teil sehr unterschied-liche physikalische Meßprinzipien zugrunde liegen. So wird beispielsweise der Füllstand eines Füllguts in einem Behälter über die Laufzeit von Ultraschallwellen oder von elektromagnetischen Wellen, insbesondere von Mikrowellen ermittelt, die an der Oberfläche des Füllguts reflektiert werden. Beim Einsatz von Mikrowellen werden diese entweder frei in den Behälter in Richtung der Oberfläche des Füllguts abgestrahlt, oder die Mikrowellen werden entlang eines leitfähigen Elements in den Behälter hineingeführt.
Darüber hinaus werden kapazitive und radiometrische Meßverfahren zur Füllstandsmessung herangezogen.

Zur Detektion des Grenzstands eines Füllguts in einem Behälter wird bevorzugt die Resonanzfrequenz eines Schwingstabes oder eines schwingfähigen Gebildes, das aus mehreren Schwingstäben besteht, ausgewertet. Bei dieser Meßmethode wird der Effekt ausgenutzt, daß die Resonanzfrequenz eine andere ist, je nachdem ob die Schwingstäbe ihre Schwingungen frei oder in Kontakt mit dem Füllgut ausführen. Entsprechende Messgeräte werden von der Anmelderin in vielen möglichen Varianten angeboten und vertrieben.

EP 1043640 offenbart eine Vorrichtung zur Überwachung eines Automatisierungssystemes mit zumindest einer elektrischen, elektronischen und/oder programmierbar elektronischen Komponente bzw. einer ersten Einheit, die zumindest eine sicherheitsrelevante Schutzfunktion erfüllt, wobei die sicherheitsrelevante Schutzfunktion einem vorgegebenen Sicherheitsstandard genügt und entsprechend dem vorgegebenen Sicherheitsstandard entwickelt ist.

Der Erfindung liegt die Aufgabe zugrunde, eine kostengünstige Vorrichtung und ein Verfahren zur Erfüllung vorgegebener Sicherheitsanforderungen vorzuschlagen.

Die Aufgabe wird dadurch gelöst, dass zumindest eine elektrische, elektro-nische und/oder programmierbar elektronische Komponente vorgesehen sind/ist, die zumindest eine sicherheitsrelevante Schutzfunktion erfüllen bzw. erfüllt, wobei die sicherheitsrelevante Schutzfunktion einem vorge-gebenen Sicherheitsstandard genügt und entsprechend dem vorgegebenen Sicherheitsstandard entwickelt ist.

Ziel der Erfindung ist es also insbesondere, ein Feldgerät mit mehreren Funktionen bereitzustellen, wobei es sich bei zumindest einer der Funktionen um eine sicherheitsrelevante Funktion handelt. Diese zumindest eine sicherheitsrelevante Funktion ist so entwickelt, dass mindestens für diese wichtige Sicherheitsfunktion die Entwicklungsrichtlinien, die einem vorgegebenen Sicherheitsstandard entsprechen, eingehalten werden. Bei dem Sicherheitsstandard handelt es sich z.B. um die IEC 61508.

Um ein konkretes Beispiel zu nennen, handelt es sich bei der Vorrichtung zur Bestimmung und/oder Überwachung einer physikalischen oder chemischen Prozeßgröße um eine Vorrichtung zur kontinuierlichen Messung und/oder Überwachung des Füllstands eines Füllguts in einem Behälter; bei der Schutzfunktion handelt es sich um eine Grenzschalter-funktion. Bei dem Füllstandsmeßgerät handelt es sich beispielsweise um ein radiometrisches Messgerät. Die sicherheitsrelevante Schutzfunktion stellt dann insbesondere sicher, dass ein maximaler Füllstand in einem Behälter sicher erkannt und nachfolgend nicht überschritten wird. Handelt es sich beispielsweise bei dem Füllgut um ein explosives oder giftiges Füllgut, so darf ein maximal vorgesehener Füllstand keinesfalls überschritten werden, damit das gefährliche Füllgut nicht aus dem Behälter überläuft.

Besonders vorteilhaft an der erfindungsgemäßen Lösung ist hierbei, dass alle Komponenten, die keine sicherheitsrelevanten Funktionen zu erfüllen haben, nicht nach diesen Sicherheitsrichtlinien entwickelt sein müssen. Bezogen auf den obigen Fall bedeutet dies, dass alle Komponenten des Füllstandsmessgeräts im Bereich der kontinuierlichen Messung bis kurz vor Erreichen des maximal zulässigen Füllstandswertes keinen Sicherheits-standard erfüllen bzw. nach einem Sicherheitsstandard entwickelt sind; lediglich die Schutzfunktion erfüllt den Sicherheitsstandard. Hierdurch wird es möglich, nicht nach sicherheitsrelevanten Gesichtspunkten konstruierte Messgeräte nachträglich so auszugestalten, dass zumindest die Schutzfunktion den geforderten Sicherheitsstandard erfüllt. Damit wird eine Zulassung des Messgeräts für den Einsatz in gefährdeten Bereichen erreicht.

Gemäß einer vorteilhaften Weiterbildung der erfindungsgemäßen Vorrichtung ist die Schutzfunktion bzw. die Grenzschalterfunktion hard- und/oder softwaremäßig ausgestaltet ist. Hardwaremäßig bedeutet z. B., dass die Bauteile der Schutzfunktion bzw. der Grenzschalterfunktion redundant ausgestaltet sind. Zusätzlich wird vorgeschlagen, dass die Schutzfunktion bzw. die Grenzschalterfunktion diversitär ausgestaltet ist, d.h. die redundanten Bauteile kommen von unterschiedlichen Herstellern, wodurch systematische Fehlfunktionen der Bauteile mit hoher Wahrschein-lichkeit ausgeschlossen werden können. Durch diese Maßnahmen - für sich genommen oder in Kombination - lassen sich höchste Sicherheitsan-forderungen erfüllen. Im Falle von Software bedeutet diversitär, dass die Programme von unterschiedlichen Programmierfirmen bzw. unterschied-lichen Programmierern erstellt werden. Auch hierdurch soll mit an Sicher-heit grenzender Wahrscheinlichkeit die Eliminierung von systematischen Fehlern erzielt werden.

Um sicherzustellen, dass die Information nicht auf dem Übertragungsweg z. B. zu einer entfernten Leitstelle verfälscht wird, ist ein digitales Bussystem vorgesehen, das einem vorgegebenen Sicherheitsstandard genügt und/oder das entsprechend dem vorgegebenen Sicherheitsstandard entwickelt ist. So ist sichergestellt, dass die Daten von dem Messgerät auch korrekt an die entfernte Leitstelle übertragen werden.

Gemäß einer vorteilhaften Weiterbildung der erfindungsgemäßen Vorrichtung wird vorgeschlagen, dass die Schutzfunktion bzw. die Grenzschalterfunktion aus einem analogen Stromsignal abgeleitet ist.

Eine andere Ausrichtung der Erfindung zielt darauf ab, ein Messgerät, das einem vorgegebenen Sicherheitsstandard genügt, mit einem Parametrier- und/oder Kalibriertool zu parametrieren bzw. zu kalibrieren, welches selbst nicht nach einem vorgegebenen Sicherheitsstandard entwickelt wurde bzw. welches einen vorgegebenen Sicherheitsstandard nicht erfüllt. Bei dem Tool handelt es sich z. B. um ein lokales Displays oder um einen PC, das bzw. der an das Messgerät angeschlossen wird. Insbesondere ist es das Ziel der Erfindung, eine sichere Parametrierung eines Messgeräts, z. B. des radiometrischen Messgeräts FMG 60 der Anmelderin unter den Bedingungen der Norm IEC61508 zu gewährleisten.

Als Parametrier-Tool ist bevorzugt das von der Anmelderin angebotene und vertriebene ToF-Tool zu nennen. Andere Parametrier-Tools sind AMS, PDM, etc.

Problematisch ist nun, dass z.B. das ToF-Tool nicht nach der SIL-Norm IEC61508 entwickelt wurden. Generell lässt sich sagen, dass PC-gestützte Tools wegen der mangelnden Sicherheit der PCs generell nicht als sicher betrachtet werden können. Daher wird erfindungsgemäß eine Vorrichtung und ein Verfahren vorgeschlagen, welche sicherstellen, dass im Messgerät die Parameter so vorhanden und wirksam sind, wie es vom Anwender auf Grund der Applikation definiert wurde.

Da ein Messgerät von sich aus nicht kontrollieren kann, welche Parameter richtig oder falsch sind, ist erfindungsgemäß eine fehlersichere Kontrolle durch den Anwender erforderlich. Die Erfindung beschreibt eine Vorrichtung und ein Verfahren, wie zuerst mit einem keinen Sicherheitsstandard erfüllenden Tool parametriert und dann mit diesem Tool kontrolliert wird. Darüber hinaus wird eine Signalstrecke vorgeschlagen, über die zumindest das analoge Stromsignal der Schutzfunktion bzw. der Grenzschalterfunktion von der ersten Einheit in die zweite Einheit übertragbar ist, wobei die erste Einheit dem vorgegebenen Sicherheitsstandard genügt und nach dem vorgegebenen Sicherheitsstandard entwickelt ist und wobei die Signalstrecke und/oder die zweite Einheit dem Sicherheitsstandard nicht genügen/genügt. Weiterhin ist eine Regel-/Auswerteeinheit vorgesehen, die die Schutzfunktion bzw. die Grenzschalterfunktion von der zweiten Einheit in die erste nach dem vorgegebenen Sicherheitsstandard entwickelten Einheit zurücküberträgt. Die von der ersten Einheit übertragene Schutz-funktion bzw. Grenzschalterfunktion und die in die erste Einheit zurück-gelesene Schutzfunktion bzw. Grenzschalterfunktion sind dann für einen Anwender erkennbar und unterscheidbar.

Als besonders vorteilhaft wird die Ausgestaltung angesehen, dass eine Eingabeeinheit, ein Bedientool und/oder ein Display vorgesehen sind/ist, über das/die die Vorrichtung parametrierbar und/oder kalibrierbar ist. Insbesondere wird nachfolgend ein erfindungsgemäßes Verfahren darge-stellt, mit dem es möglich ist, mittels eines Kalibrier- und Parametrier-Tools, das nicht nach einem Sicherheitsstandard entwickelt ist, die Kalibrierung bzw. Parametrierung einer Schutzfunktion so vorzunehmen, dass der Sicherheitsstandard gewahrt bleibt.

Gemäß einer vorteilhaften Weiterbildung der erfindungsgemäßen Vorrichtung ist ein Schaltelement vorgesehen, über das die Schutzfunktion bzw. die Grenzschalterfunktion ein- oder ausschaltbar ist.

Die Aufgabe wird bezüglich des Verfahrens zur Bestimmung und/oder Überwachung einer Prozessgröße dadurch gelöst, dass ein Wert für zumindest einen Prozessparameter über ein Auswahlmenü an einer zweiten, nicht nach einem Sicherheitsstandard entwickelten Einheit bzw. keinen Sicherheitsstandard erfüllenden Einheit definiert wird; der ausgewählte Wert des Prozessparameters wird an eine erste nach einem Sicherheitsstandard entwickelte Einheit, die eine sicherheitsrelevante Schutzfunktion erfüllt, übermittelt; anschließend wird der ausgewählte Prozessparameter von der ersten Einheit an die zweite Einheit rückübertragen; letztlich wird der der Parameter in der ersten Einheit gespeichert, wenn der an der zweiten Einheit angezeigte Wert des Prozessparameters mit dem ausgewählten Wert des Prozessparameters übereinstimmt und vom Anwender als korrekt bestätigt wird.

Bevorzugt wird der ausgewählte Wert des Prozessparameters über die Eingabe von einem PASSWORD in der ersten Einheit verriegelt. Ein gespeicherter Prozessparameter kann anschließend nur noch über die entsprechende PASSWORD-Eingabe editiert und verändert werden.

Die Erfindung wird anhand der nachfolgenden Figuren näher erläutert. Es zeigt:
Fig. 1: eine erste Ausgestaltung der erfindungsgemäßen Vorrichtung,
Fig. 2: eine zweite Ausgestaltung der erfindungsgemäßen Vorrichtung,
Fig. 3: eine dritte Ausgestaltung der erfindungsgemäßen Vorrichtung und
Fig. 4: ein Flussdiagramm, das die Arbeitsweise des erfindungsgemäßen Verfahrens wiedergibt.

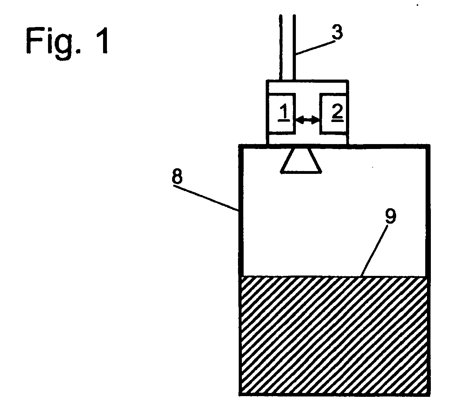

Fig. 1 zeigt eine erste Ausgestaltung der erfindungsgemäßen Vorrichtung zur Bestimmung und/oder Überwachung einer physikalischen oder chemischen Prozeßgröße. Das Messgerät weist zumindest eine elektrische, elektronische und/oder programmierbar elektronische Komponente 1 auf, die zumindest eine sicherheitsrelevante Schutzfunktion erfüllt bzw. erfüllen. Die sicherheitsrelevante Schutzfunktion genügt einem vorgegebenen Sicherheitsstandard, oder sie ist entsprechend dem vorgegebenen Sicher-heitsstandard entwickelt. Bevorzugt handelt es sich bei der sicherheits-relevanten Schutzfunktion um eine Grenzschalterfunktion. Gezeigt ist ein Radar-Messgerät, jedoch kann es sich natürlich auch um ein radio-metrisches Messgerät handeln oder um einen Vibrationsdetektor, der für Dichte-, Viskositätsmessung und Grenzstandmessung ausgelegt ist.

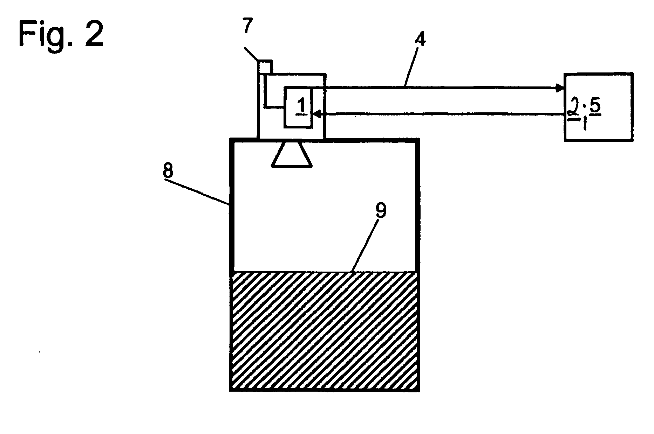

Fig. 2 zeigt eine zweite Ausgestaltung der erfindungsgemäßen Vorrichtung. Zwischen einer ersten Einheit 1 und einer zweiten Einheit 2 ist eine Signalstrecke 4 vorgesehen, über die zumindest das analoge Stromsignal der Schutzfunktion bzw. der Grenzschalterfunktion von der ersten Einheit 1 in die zweite Einheit 2 übertragbar ist. Die erste Einheit 1 genügt einem vorgegebenen Sicherheitsstandard bzw. sie ist nach dem vorgegebenen Sicherheitsstandard entwickelt. Die Signalstrecke 4 und/oder die zweite Einheit 2 genügen/genügt dem Sicherheitsstandard nicht. Im gezeigten Fall ist der zweiten Einheit 2 eine Regel-/Auswerteeinheit 5 zugeordnet, die die Schutzfunktion bzw. die Grenzschalterfunktion von der zweiten Einheit 2 in die erste nach dem vorgegebenen Sicherheitsstandard entwickelten Einheit 1 zurücküberträgt. Die von der ersten Einheit 1 übertragene Schutzfunktion bzw. Grenzschalterfunktion und die von der zweiten Einheit 2 in die erste Einheit 1 zurückgelesene Schutzfunktion bzw. Grenzschalterfunktion sind für den Anwender erkennbar und unterscheidbar. An der ersten Einheit 1 ist ein Schalter 7 angebracht, mit dem die Schutzfunktion zu- und abschaltbar ist.

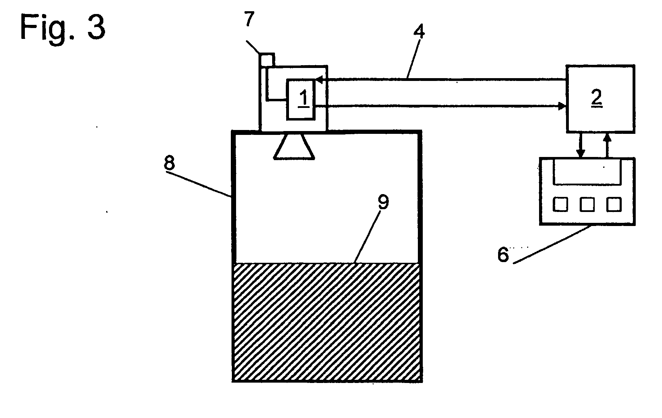

In Fig. 3 ist eine dritte Ausgestaltung der erfindungsgemäßen Vorrichtung zu sehen. Ein ausgewählter Wert für zumindest einen Prozessparameter wird über ein Auswahlmenü an einer zweiten, nicht nach einem Sicher-heitsstandard entwickelten Einheit 2; 6 bzw. keinen Sicherheitsstandard erfüllenden Einheit 2; 6 definiert. Der ausgewählte Wert des Prozess-parameters wird an eine erste nach einem Sicherheitsstandard entwickelte Einheit 1, die eine sicherheitsrelevante Schutzfunktion erfüllt, übermittelt, wobei der ausgewählte Prozessparameter von der ersten Einheit 1 an die zweite Einheit 2 rückübertragen wird. Der Parameter wird in der ersten Einheit gespeichert, wenn der an der zweiten Einheit 2; 6 angezeigte Wert des Prozessparameters mit dem ausgewählten Wert des Prozess-parameters übereinstimmt. Die Überprüfung erfolgt durch Intervention des Anwenders. Die erste Einheit 1 und die zweite Einheit 2 sind über eine Datenverbindung, z.B. über ein Bussystem 4 miteinander verbunden. Die Daten hinsichtlich der Prozessparamter werden über das Bussystem 4 ausgetauscht. Das Bussystem kann, muss aber nicht nach einem Sicherheitsstandard entwickelt sein, bzw. es ist im Zusammenhang mit der Erfindung nicht erforderlich, dass das Bussystem 4 einen vorgegebenen Sicherheitsstandard erfüllt.

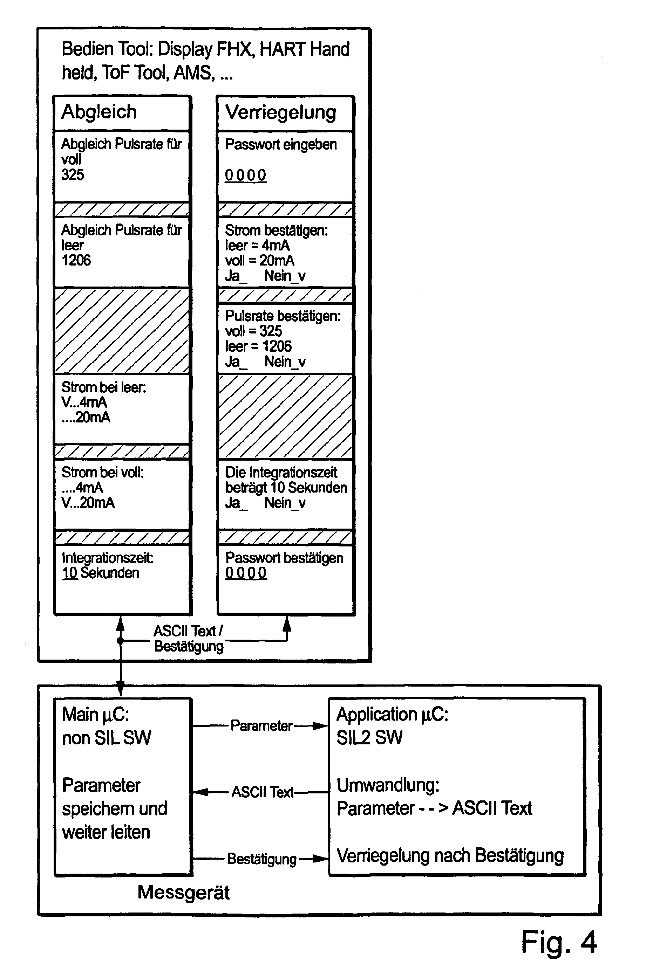

In Fig. 4 ist der Datenfluß für eine sichere Parametrierung eines Messgeräts beschrieben. In einem ersten Schritt werden - wie üblich - zuerst einmal alle Parameter über zumindest ein entsprechendes Auswahlmenü vom Anwender definiert. Diese Parameter werden vom Display oder von dem jeweils eingesetzten Bedientool ins Gerät gesendet. Das Bedientool bzw. der PC erfüllen den geforderten Sicherheitsstandard nicht.

Im Messgerät und/oder im Bedientool/PC werden die Parameter gespeichert. Soll das Gerät unter den Gesichtspunkten der funktionalen Sicherheit verriegelt werden, so können die Parameter von einer nach einem vorgegebenen Sicherheitsstandard, z.B. dem IEC61508 entwickelten Software im Messgerät in einen Text umgewandelt werden.

Zur Verriegelung wird ein PASSWORD eingegeben. Durch diese Eingabe werden bestimmte Parameter, wie beispielsweise Filter, auf Defaultwerte gesetzt, die nicht durch den Anwender bei Verwendung des Messgeräts als z.B. SIL2 Gerät - also einen vorgegebenen Sicherheitsstandard erfüllenden Messgeräts - editiert werden können. Die sicherheitsrelevanten Parameter sind also gegen ungewollte oder unautorisierte Änderungen gesichert.

Anschließend werden die sicherheitsrelevanten und editierbaren Parameter (nun in Text-Form) wieder an das Display bzw. an das Bedientool zurückübertragen und kommen auf dem Display zur Anzeige. Der Anwender muß jeden Parameter einzeln oder in Gruppen bestätigen. Dazu ändert er das Auswahlzeichen "v" von Nein auf Ja und bestätigt die Änderung mit "Enter". Mit dieser Bestätigung wird der Parameter oder die Parametergruppe vorverriegelt. Am Ende der Abfragesequenz muß das PASSWORD noch einmal wiederholt werden. Wird das PASSWORD bei der Bestätigung richtig eingegeben, so werden im Messgerät alle sicherheitsrelevanten und editierbaren Parameter endgültig verriegelt. Das Paßwort ist dann nicht mehr einsehbar. Es wird durch XXXX dargestellt.

Eine Entriegelung des Messgeräts ist anschließend nur noch mit dem richtigen PASSWORD möglich. Hier genügt es, das PASSWORD einmal einzugeben. Die nicht editierbaren Parameter müssen übrigens nicht bestätigt werden.

Die Anzahl der einzelnen Bestätigungen ohne Eingabe des PASSWORDs kann z.B. mindestens drei betragen. Maximal sollten nicht mehr als zehn Bestätigungen erfolgen. Bei einer größeren Anzahl besteht die Gefahr, dass ohne zu lesen blind bestätigt wird. Damit wäre der Sicherheitseffekt aufgehoben.

Für den Fall, das das PASSWORD vergessen wurde, ist ein Total Reset vorgesehen. Durch einen Total Reset werden alle Parameter auf ihre DefaultWerte gesetzt. Das PASSWORD wird gelöscht. Die Voraussetzung für diese Vorgehensweise ist, dass das Messgerät nach einem Total Reset auf Fehlerstrom geht, dass dieser Zustand des Ausgangsstroms sicher überwacht wird.

Die Tatsache, dass die Parameter in der gezeigten Ausgestaltung über einen Haupt-Prozessor an einen Applications-Prozessor geschickt werden, ist eine Besonderheit des hier verwendeten radiometrischen Messgeräts FMG60. Es soll die bereits vorhandene Plattform des FMG60 beibehalten werden. Generell gilt das Verfahren auch für eine Ein-Prozessor-Lösung, oder aber der Haupt-Prozessor ist ebenfalls unter den Vorgaben des vorgegebenen Sicherheitsstandards, z.B. der IEC61508 entwickelt. Hierbei ist die Weitergabe und die Umwandlung der eingegebenen Parameter in einen ASCII Text durch den Application µC nicht erforderlich.

Der Hauptvorteil dieser Vorgehensweise liegt in der Unabhängigkeit der Wahl der Bedientools. Da die gesamte sicherheitsrelevante Software im Messgerät liegt, ist es nicht erforderlich, das Bedientool im Sicherheits-konzept weiter berücksichtigt werden. Das Bedientool muss lediglich in der Lage sein, den zu bestätigenden Text vollständig anzuzeigen.

Sind zwischen einem für die sicherheitsrelevante Funktion zuständigen Funktionsblock und einer das sicherheitsrelevante Signal auswertenden Einheit mehrere nicht nach einem Sicherheitsstandard entwickelten Blöcke (z.B. ein noch nicht zertifiziertes, und dem vorgegebenen Sicherheits-standard entsprechendes Bussystem) angeordnet, so ist eine sichere Rückkopplung des sicherheitsrelevanten Signals notwendig.

Das erfindungsgemäße Verfahren erweitert die Kombinationsmöglichkeiten von Komponenten und Funktionen für den Anwender eines Messgeräts, ohne dass er gezwungen ist, für sicherheitsrelevante Applikationen die Betriebsbewährung des Gesamtsystems nachweisen zu müssen. Lediglich die sicherheitsrelevanten Funktionen sind in einem sicheren Design-Prozess erstellt worden und können von verbleibenden, nicht sicherheits-relevanten Funktionen isoliert gesehen werden.

## Patentansprüche

1. Vorrichtung zur Bestimmung und/oder Überwachung einer physikalischen oder chemischen Prozessgröße
mit zumindest einer elektrischen, elektronischen und/oder programmierbar elektronischen Komponente bzw. einer ersten Einheit (1), die zumindest eine sicherheitsrelevante Schutzfunktion erfüllt,
wobei die sicherheitsrelevante Schutzfunktion einem vorgegebenen Sicherheitsstandard genügt und entsprechend dem vorgegebenen Sicherheitsstandard entwickelt ist, **dadurch gekennzeichnet daß** die Schutzfunktion aus einem analogen Stromsignal abgeleitet ist,
wobei eine Signalstrecke (4) vorgesehen ist,
über die zumindest das analoge Stromsignal der Schutzfunktion von der ersten Einheit (1) in eine zweite Einheit (2) übertragbar ist,
wobei die Signalstrecke (4) und/oder die zweite Einheit (2)
dem Sicherheitsstandard nicht genügen/genügt,
wobei eine Regel-/Auswerteeinheit (5) vorgesehen ist,
die die Schutzfunktion von der zweiten Einheit (2) in die erste nach dem vorgegebenen Sicherheitsstandard entwickelten Einheit zurücküberträgt, und
wobei die von der ersten Einheit (1) übertragene Schutzfunktion und die in die erste Einheit (1) zurückgelesene Schutzfunktion erkennbar und unterscheidbar sind.

2. Vorrichtung nach Anspruch 1,
wobei es sich bei der Vorrichtung zur Bestimmung und/oder Überwachung einer physikalischen oder chemischen Prozeßgröße um eine Vorrichtung zur kontinuierlichen Messung und/oder Überwachung des Füllstands eines Füllguts (9) in einem Behälter (8) handelt und
wobei es sich bei der Schutzfunktion um eine Grenzschalterfunktion handelt.

3. Vorrichtung nach Anspruch 2,
wobei die Schutzfunktion bzw. die Grenzschalterfunktion hard- und/oder softwaremäßig ausgestaltet ist.

4. Vorrichtung nach Anspruch 1, 2 oder 3,
wobei die Schutzfunktion bzw. die Grenzschalterfunktion redundant ausgestaltet ist.

5. Vorrichtung nach Anspruch 1, 2 oder 3,
wobei die Schutzfunktion bzw. die Grenzschalterfunktion diversitär ausgestaltet ist.

6. Vorrichtung nach Anspruch 1 oder 2,
wobei zwecks Übertragung der Schutzfunktion ein digitales Bussystem (4) vorgesehen ist, das einem vorgegebenen Sicherheitsstandard genügt und das entsprechend dem vorgegebenen Sicherheitsstandard entwickelt ist.

7. Vorrichtung nach Anspruch 6,
wobei eine Eingabeeinheit, ein Bedientool und/oder ein Display (6) vorgesehen ist, über das die Vorrichtung parametrierbar und/oder kalibrierbar ist.

8. Vorrichtung nach Anspruch 1 oder 2,
wobei ein Schaltelement (7) vorgesehen ist, über das die Schutzfunktion bzw. die Grenzschalterfunktion ein- oder ausschaltbar ist.

9. Verfahren zur Bestimmung und/oder Überwachung einer Prozessgröße, wobei ein Wert für zumindest einen Prozessparameter über ein Auswahlmenü an einer zweiten, nicht nach einem Sicherheitsstandard entwickelten Einheit (2; 6) bzw. keinen Sicherheitsstandard erfüllenden Einheit (2; 6) definiert wird,
wobei der ausgewählte Wert des Prozessparameters an eine erste nach einem Sicherheitsstandard entwickelte Einheit (1), die eine sicherheitsrelevante Schutzfunktion erfüllt, übermittelt wird, **dadurch** gekenzeichnet daß
der ausgewählte Prozessparameter von der ersten Einheit (1) an die zweite Einheit (2) rückübertragen wird,
und wobei der Parameter in der ersten Einheit (1) gespeichert wird, wenn der an der zweiten Einheit (2) angezeigte Wert des Prozessparameters mit dem ausgewählten Wert des Prozessparameters übereinstimmt.

10. Verfahren nach Anspruch 9,
wobei über eine PASSWORD-Eingabe der ausgewählte Wert des Prozessprameters in der ersten Einheit verriegelt wird.

11. Verfahren nach Anspruch 9 oder 10,
wobei über eine PASSWORD-Eingabe ein gespeicherter Prozessparameter editiert und veränderbar wird.

## Claims

1. Device for determining and/or monitoring a physical or chemical process variable with at least one electric, electronic and/or programmable electronic component, or a first unit (1) that satisfies at least one safety-related protective function, where said safety-related protective function meets a specified safety standard and is developed in accordance with the specific safety standard, **characterized in that** the protective function is derived from an analog current signal, where a signal path (4) is provided via which at least the analog current signal of the protective function can be transmitted from the first unit (1) to a second unit (2), whereby the signal path (4) and/or the second unit (2) do/does not meet the safety standard, and whereby a control/evaluation unit (5) is provided that transfers the protective function from the second unit (2) back to the first unit based on the specified safety standard, and where the protective function transmitted from the first unit (1) and the protective function read back into the first unit (1) are recognizable and distinguishable.

2. Device as per Claim 1, where the device for determining and/or monitoring a physical or chemical process variable is a device for the continuous measurement and/or monitoring of the level of the medium (9) in a container (8) and where the protective function is a limit switch function.

3. Device as per Claim 2, where the protective function or limit switch function is accomplished by hardware and/or software.

4. Device as per Claim 1, 2 or 3, where the protective function or limit switch function is embodied redundantly.

5. Device as per Claim 1, 2 or 3, where the protective function or limit switch function is embodied with diversity.

6. Device as per Claim 1 or 2, where a digital bus system (4) is provided for the purpose of transmitting the protective function, said bus system satisfying a given safety standard and developed in accordance with the given safety standard.

7. Device as per Claim 6, where an input unit, an operating tool and/or a display (6) is provided by means of which the device can be configured and/or calibrated.

8. Device as per Claim 1 or 2, where a switching element (7) is provided by means of which the protective function or the limit switch function can be switched on or off.

9. Process for determining and/or monitoring a process variable where a value for at least one process parameter is defined by means of a selection menu at a second unit (2; 6) which is not developed as per a safety standard, or does not meet a safety standard, where the selected value of the process parameter is transmitted to a first unit (1), which is developed as per a safety standard and satisfies a safety-related protective function, **characterized in that** the selected process parameter is transmitted back from the first unit (1) to the second unit (2) and where the parameter is stored in the first unit (1) if the value of the process parameter displayed at the second unit (2) matches the selected value of the process parameter.

10. Process as per Claim 9, where the selected value of the process parameter in the first unit is locked by entering a PASSWORD.

11. Process as per Claim 9 or 10, where a saved process parameter can be edited and modified by entering a PASSWORD.

## Revendications

1. Dispositif destiné à la détermination et/ou la surveillance d'une grandeur process physique ou chimique
avec au moins un composant électrique, électronique et/ou électronique programmable ou une première unité (1), qui remplit au minimum une fonction de protection importante pour la sécurité,
la fonction de protection importante pour la sécurité satisfaisant à une norme de sécurité prédéfinie et étant développée conformément à la norme de sécurité prédéfinie,
**caractérisé en ce que**
la fonction de protection est dérivée d'un signal de courant analogique,
une ligne de signal (4) étant prévue,
par l'intermédiaire de laquelle au moins le signal de courant de la fonction de protection est transmissible par la première unité (1) à une deuxième unité (2),
la ligne de signal (4) et/ou la deuxième unité (2) satisfaisant ou non à la norme de sécurité,
une unité de régulation / d'exploitation (5) étant prévue,
qui retransmet la fonction de sécurité depuis la deuxième unité (2) à la première unité (1) développée d'après la norme de sécurité prédéfinie, et la fonction de protection transmise par la première unité (1) et la fonction de protection retransmise à la première unité (1) pouvant être identifiées et distinguées.

2. Dispositif selon la revendication 1,
pour lequel il s'agit d'un dispositif destiné à la détermination et/ou la surveillance d'une grandeur process physique ou chimique, d'un dispositif destiné à la mesure et/ou la surveillance continue(s) du niveau d'un produit (9) au sein d'un réservoir (8) et pour lequel il s'agit, concernant la fonction de protection, d'une fonction de détection de niveau.

3. Dispositif selon la revendication 2,
pour lequel la fonction de protection ou la fonction de détection de niveau est conçue de façon matérielle et/ou logicielle.

4. Dispositif selon la revendication 1, 2 ou 3,
pour lequel la fonction de protection ou la fonction de détection de niveau est conçue de façon redondante.

5. Dispositif selon la revendication 1, 2 ou 3,
pour lequel la fonction de protection ou la fonction de détection de niveau est conçue de façon diversitaire.

6. Dispositif selon la revendication 1 ou 2,
pour lequel est prévu, à des fins de transmission de la fonction de protection, un système de bus numérique (4), qui satisfait à une norme de sécurité prédéfinie et qui a été développé conformément à la norme de sécurité prédéfinie.

7. Dispositif selon la revendication 6,
pour lequel est prévu une unité de saisie, un outil de service et/ou un afficheur (6), par l'intermédiaire desquels le dispositif est paramétrable et/ou étalonnable.

8. Dispositif selon la revendication 1 ou 2,
pour lequel est prévu un élément de commutation (7), par l'intermédiaire duquel la fonction de protection ou la fonction de détection de niveau est activable ou désactivable.

9. Procédé destiné à la détermination et/ou la surveillance d'une grandeur process, pour lequel est définie une valeur pour au moins un paramètre de process par le biais d'un menu de sélection se trouvant sur une deuxième unité (2, 6) non développée d'après la norme de sécurité, ou sur une unité (2, 6) ne satisfaisant à aucune norme de sécurité, pour lequel la valeur sélectionnée du paramètre de process est transmise à une première unité (1) développée d'après une norme de sécurité, qui remplit une fonction de protection importante pour la sécurité, **caractérisé en ce que** le paramètre de process sélectionné est retransmis par la première unité (1) à la deuxième unité (2),
et **en ce que** le paramètre est enregistré dans la première unité (1) lorsque la valeur affichée sur la deuxième unité (2) du paramètre de process concorde avec la valeur sélectionnée du paramètre de process.

10. Procédé selon la revendication 9,
pour lequel la valeur sélectionnée du paramètre de process est verrouillée dans la première unité par la biais de l'entrée d'un MOT DE PASSE.

11. Procédé selon la revendication 9 ou 10,
pour lequel un paramètre de process enregistré peut être édité ou modifié par la biais de l'entrée d'un MOT DE PASSE.
